# EUROPEAN PATENT APPLICATION

(11) **EP 1 228 694 A1**
(43) Date of publication of application: **07.08.2002**
(21) Application number: 01200402.4
(22) Date of filing: 02.02.2001
(51) Int. Cl.: A23C 11/04, A23F 5/40

(54) **Aromatizing agent**

(71) Applicant: SOCIETE DES PRODUITS NESTLE S.A., 1800 Vevey (CH)
(72) Inventor: Witschi, Friedrich, 8311 Brütten (CH); Macinnes, William Michael, 1005 Lausanne (CH)
(74) Representative: Wavre, Claude-Alain

(57) **Abstract**

An aromatizing agent comprising granules formed of particles of a foaming agent and particles and/or droplets of an aroma compound agglomerated with an agglomerating agent.

## Description

The present invention relates to an aromatizing agent and to a process for manufacturing it.

WO0044238 (SOCIETE DES PRODUITS NESTLE S.A.) discloses an aromatized, soluble creamer powder, which comprises particles formed of a matrix of proteins, fats, carbohydrates and a coffee aroma system, and which may be gassed for building a foam upon reconstitution.

A first object of the present invention is to provide a water soluble aromatizing agent in powder form which is able to quickly release aroma on the surface of a liquid.

A second object of the present invention is to provide a water soluble aromatizing agent in powder form which is able to release aroma both within a liquid and on the surface of the liquid.

A third object of the present invention is to provide a process for manufacturing a water soluble aromatizing agent in powder form which is able to quickly release aroma within a liquid and/or on the surface of a liquid.

To this end the aromatizing agent according to the present invention comprises granules formed of particles of a foaming agent and particles and/or droplets of an aroma compound agglomerated with an agglomerating agent.

The process according to the present invention comprises agglomerating together particles of a foaming agent and particles and/or droplets of an aroma compound with an agglomerating agent.

The aromatizing agent according to the present invention indeed has proved surprisingly to be able to quickly release aroma within a liquid and even more surprisingly to be able to release aroma on the surface of a liquid upon reconstitution wherefrom the aroma can be perceived by the consumer's nose.

Generally speaking, when reconstituting a dehydrated powdery food product in a liquid, the aroma compound has to diffuse to the surface of the product in order to be perceived by the consumer's nose.

Thus, the gas bubbles released by the foaming agent comprised in the present aromatized agent improve the release of volatile aroma compound. The gas bubbles act as a "fast" carrier of the compounds to the surface of the liquid.

The advantage is that the aroma dosage can be reduced and that as long as gas bubbles rise to the surface, there will be an additional convective transport of the volatile aromas to the surface. This will also greatly improve the aroma perception of the product.

Another advantage of the present aromatizing agent is that its solubility is improved as compared with that of a traditional dense aroma entrapment powder, and the perception of the aroma/flavour can occur even at cold solvent temperatures.

The aromatizing agent according to the present invention thus comprises granules formed of particles of a foaming agent and particles and/or droplets of an aroma compound agglomerated with an agglomerating agent.

The particles of a foaming agent may comprise a matrix containing carbohydrates and protein and entrapped gas.

The carbohydrates in the matrix may be any suitable sugar or starch product such as lactose, dextrose, fructose, sucrose, starch, maltodextrin or corn syrup, for example.

The protein in the matrix may be any suitable protein of animal or vegetable origin such as milk proteins, soy proteins or wheat proteins, for example.

The matrix may also contain fat as an ingredient. The fat may be milk fat, vegetable fat or animal fat, for example.

The carbohydrates, protein and fat may respectively provide 40 to 98%, 2 to 50% and up to 30% by weight of the matrix, for example.

The particles of the foaming agent may provide 10 to 80%, preferably 15 to 50%, more preferably 15 to 25% by weight of the aromatizing agent, for example.

The gas entrapped in the matrix may be any suitable food grade gas such as nitrogen, carbon dioxide, air or mixtures of them, for example.

The gas may be entrapped in the matrix in an amount to release 1 to 25 ml of gas at room temperature per g of soluble foaming agent, for example.

The particles of an aroma compound may comprise a natural or synthetic aroma concentrate entrapped in a matrix of a suitable aroma support such as starch, for example.

The droplets of an aroma compound may comprise a natural or synthetic aroma concentrate dissolved in a suitable liquid solvent such as oil, for example.

The aroma itself may be any suitable, attractive food grade aroma such as a coffee, chocolate, herb, fruit or spice aroma, for example.

The particles and/or droplets of an aroma compound may be present in the aromatizing agent in an amount such that a reasonable amount of aromatizing agent has to be added to a liquid for adequately aromatizing it.

In other words, if a reasonable amount of aromatizing agent to be added may be considered to be about 0.25 to 2.5% by weight of the liquid to be aromatized and if the amount of aroma compound able to adequately aromatize the liquid is supposed to be about 0.005 to 0.1% by weight of the liquid, the particles and/or droplets of an aroma compound may be present in the aromatizing agent in an amount of about 1.0 to 10% by weight, for example.

The agglomerating agent may be any suitable food grade agglomerating agent such as fat, especially palm fat, gum or sugar, for example.

The use of fat as agglomerating agent may provide a definite advantage in that it may push the aromatizing agent to the surface of the liquid into which it was dispersed so that a substantial part of volatile aroma is released and directly brought to the consumer's nose under the foaming effect of the foaming agent at the surface of the liquid. The fat namely may substantially protect the foaming agent and delay its dissolution within the liquid during its transport to the surface so that a substantial part of it only exerts its foaming effect when it has reached the surface of the liquid.

The agglomerating agent may provide about 1 to 80%, preferably 20 to 60% by weight of the aromatizing agent, for example.

The present aromatizing agent may in addition also comprise a filler such as starch, sodium chloride or maltodextrin, for example.

The purpose of an optional filler is to adequately modulate the speed at which the aroma is dissolved in the liquid and/or brought to the surface of the liquid under a booster effect of the foaming agent possibly coupled with an upwards pushing effect of a relatively light compound of the agglomerating agent such as fat, for example.

The possible filler may provide up to 50%, preferably up to 40% of the aromatizing agent, for example.

The present aromatizing agent may further comprise a colouring agent.

The present aromatizing agent may advantageously comprises free flowing granules 0.1-4.0, more preferably 0.3-2.5 mm in diameter.

The present aromatizing agent may be used as such, in order to prepare aromatized drinks such as fruit flavoured water, or coffee, cocoa or vanilla flavoured milk, for example.

The present aromatizing agent may also be used in addition to a dehydrated food product to be reconstituted in water, such as soups, sauces or instant noodles, or in milk, such as nutritious cocoa beverages, for example.

The present process comprises agglomerating together particles of a foaming agent and particles and/or droplets of an aroma compound with an agglomerating agent.

For carrying out this process, particles of a foaming agent may be obtained in known ways such as spray drying or freeze drying, for example.

To this end a base liquor of the matrix compounds may be prepared which has a solid concentration of about 20 to 40% by weight. The base liquor may be either gassed and then spray dried into a drying tower along with a drying gas such as hot air, or frozen, comminuted and freeze dried under vacuum.

Alternatively, particles of a foaming agent may be obtained in new ways such as convection drying a foamed concentrated solution, or gas impregnation under pressure, for example.

The first of these new ways may consist of preparing a concentrated solution of the matrix compounds having a solid concentration above about 50% by weight, foaming the concentrated solution to an overrun of at least about 200%, and drying the foamed solution in a conventional batch or continuously working convection dryer.

The second of these new ways may consist of impregnating a molten mixture of the matrix compounds with gas in an extruder under a pressure of 100 kPa to 20 MPa, for example. Alternatively it may consist of preparing a dried, particulated porous matrix by spray drying or freeze drying as disclosed above and then subjecting the particles to gas impregnation under a pressure of 100 kPa to 20 MPa at a temperature above the glass temperature transition and then rapidly quenching to ensure entrapment of the gas.

Suitable powdered and/or liquid aroma concentrates are freely available on the market.

Agglomerating together particles of a foaming agent and particles and/or droplets of an aroma compound with an agglomerating agent may be carried out by spraying the agglomerating agent onto a mixture of the powdered ingredients agitated in a rotating bowl or in a fluidised bed, for example.

In case the aroma compound is in liquid form it may be sprayed onto the powdery mixture after having been dispersed into the agglomerating agent, for example.

The Examples hereafter are given by way of illustration of various embodiments of the present aromatizing agent and of its manufacturing process.

In these Examples:
- the percentages and parts are given by weight,
- the equipment used for carrying out the agglomeration comprised a bowl coater made by the company Erweka in Germany and a M21G type Kremlin (France) spray gun,
- the bowl of the bowl coater rotated at about 80 rpm,
- the foaming agent had been prepared by gas impregnation under pressure as disclosed hereafter,
- the agglomerating agent was palm fat which was spread at 55°C onto a dry mix of the powdered compounds rotating within the bowl,
- the aromas were purchased from the company FIS, Switzerland,
- the powdered aromas were added to the dry mix,
- the liquid aromas were injected into the liquid fat before spraying,
- 500-800 g batches were prepared,
- free flowing aromatizing agents were obtained which comprised granules about 0.1-4.0 mm in diameter and were soluble in liquids at about 40-50°C.

### Preparation of the foaming agent

A mixture of 70-90 parts maltodextrin, 30-10 parts caseinate and water was prepared which had a solids content of about 55% by weight. Nitrogen gas was injected into the mixture and the mixture was spray dried to a powder. The resulting powder was then subjected to an atmosphere of nitrogen gas at a pressure of about 2 MPa and at a temperature of about 70°C for about 20 minutes. The powder was then rapidly quenched by rapid release of the pressure. Nitrogen gas was thus entrapped in the foamed matrix in an amount to release 12-14 ml of gas at room temperature per g of soluble foaming agent. A white powder was obtained which had an appearance similar to that of a soluble creamer powder.

### Example 1

An aromatizing agent was manufactured which had the following composition:

| Compound | | Amount (g) | Amount (%) |
|---|---|---|---|
| Foaming agent | | 110 | |
| Agglomerating agent | | 221 | |
| Aroma | Butter, powder | 10 | 2 |
| Filler | Maltodextrin | 164 | |
| | **TOTAL** | **505** | |

1% of this aromatizing agent (corresponding to 0.02% of aroma compound) were dispersed into water together with 0.1% sodium chloride. A nicely butter smelling savoury beverage was obtained of which a fresh butter flavour was immediately perceivable by the consumer's nose.

### Example 2

An aromatizing agent was manufactured which had the following composition:

| Compound | | Amount (g) | Amount (%) |
|---|---|---|---|
| Foaming agent | | 110 | |
| Agglomerating agent | | 221 | |
| Aroma | Butter, liquid | 5 | 1 |
| Filler | Maltodextrin | 164 | |
| | **TOTAL** | **500** | |

2% of this aromatizing agent (corresponding to 0.02% of aroma compound) were dispersed into water together with 0.1% sodium chloride. A nicely butter smelling savoury beverage was obtained of which a butter fresh flavour was immediately perceivable by the consumer's nose.

### Example 3

An aromatizing agent was manufactured which had the following composition:

| Compound | | Amount (g) | Amount (%) |
|---|---|---|---|
| Foaming agent | | 110 | |
| Agglomerating agent | | 191 | |
| Aroma | Milk chocolate, liquid | 35 | 7 |
| Filler | Maltodextrin | 164 | |
| | **TOTAL** | **500** | |

1.43% of this aromatizing agent (corresponding to 0.1% of aroma compound) were dispersed into milk together with 10% sugar. A nicely chocolate smelling milk beverage was obtained of which a chocolate fresh flavour was immediately perceivable by the consumer's nose.

### Example 4

An aromatizing agent was manufactured which had the following composition:

| Compound | | Amount (g) | Amount (%) |
|---|---|---|---|
| Foaming agent | | 110 | |
| Agglomerating agent | | 190 | |
| Aroma | Leek oil | 20 | 4 |
| Filler | Maltodextrin | 150 | |
| | Sodium chloride | 30 | |
| | **TOTAL** | **500** | |

0.25% of this aromatizing agent (corresponding to 0.01% of aroma compound) were dispersed into water together with 0.1% sodium chloride and 0.1% monosodium glutamate. A nicely leek smelling savoury beverage was obtained of which a fresh leek flavour was immediately perceivable by the consumer's nose.

### Example 5

An aromatizing agent was manufactured which had the following composition:

| Compound | | Amount (g) | Amount (%) |
|---|---|---|---|
| Foaming agent | | 110 | |
| Agglomerating agent | | 206 | |
| Aroma | Orange oil | 20 | 4 |
| Filler | Maltodextrin | 164 | |
| | **TOTAL** | **500** | |

0.125% of this aromatizing agent (corresponding to 0.005% of aroma compound) were dispersed into water together with 10% sugar and 0.15% citric acid. A nicely orange smelling refreshing beverage was obtained of which a fresh orange flavour was immediately perceivable by the consumer's nose.

### Example 6

An aromatizing agent was manufactured which had the following composition:

| Compound | | Amount (g) | Amount (%) |
|---|---|---|---|
| Foaming agent | | 150 | |
| Agglomerating agent | | 405 | |
| Aroma | Mushroom, powder | 21.7 | 2.69 |
| Filler | Maltodextrin Sodium chloride | 188.3 40 | |
| | **TOTAL** | **805** | |

0.93% of this aromatizing agent (corresponding to 0.025% of aroma compound) were dispersed into water together with a powdered mushroom soup. A nicely mushroom smelling soup was obtained of which a fresh mushroom flavour was immediately perceivable by the consumer's nose.

For comparison purpose, a similar soup was prepared while using a conventional dense aroma entrapment powder (corresponding to 0.025% of aroma compound) instead of the present aromatizing agent. A nicely mushroom smelling soup was obtained of which a comparatively less fresh mushroom flavour was relatively slowly perceivable by the consumer's nose.

### Example 7

An aromatizing agent was manufactured which had the following composition:

| Compound | | Amount (g) | Amount (%) |
|---|---|---|---|
| Foaming agent | | 150 | |
| Agglomerating agent | | 300 | |
| Aroma | Mushroom, liquid | 30 | 4.24 |
| Filler | Maltodextrin Sodium chloride | 188 40 | |
| | **TOTAL** | **708** | |

0.88% of this aromatizing agent (corresponding to 0.05% of aroma compound) were dispersed into water together with a dehydrated cup noodle mushroom soup. A nicely mushroom smelling cup noodle soup was obtained of which a fresh mushroom flavour was immediately perceivable by the consumer's nose.

For comparison purpose, a similar cup noodle soup was prepared while using a conventional dense aroma entrapment powder (corresponding to 0.05% of aroma compound) instead of the present aromatizing agent. A nicely mushroom smelling cup noodle soup was obtained of which a comparatively less fresh mushroom flavour was relatively slowly perceivable by the consumer's nose.

## Claims

1. An aromatizing agent comprising granules formed of particles of a foaming agent and particles and/or droplets of an aroma compound agglomerated with an agglomerating agent.

2. Aromatizing agent according to claim 1, which comprises, in % by weight, 10 to 80% of foaming agent, 1.0 to 10% of aroma compound, 1 to 80% of agglomerating agent and up to 50% of a filler.

3. Aromatizing agent according to claim 1, in which the particles of a foaming agent comprise a matrix containing carbohydrates and protein and entrapped gas.

4. Aromatizing agent according to claim 3, in which the carbohydrates, the protein and fat respectively provide 40 to 98%, 2 to 50% and up to 30% by weight of the matrix.

5. Aromatizing agent according to claim 1, in which the gas is entrapped in the matrix in an amount to release 1 to 25 ml of gas at room temperature per g of soluble foaming agent.

6. Aromatizing agent according to claim 1, in which the particles of an aroma compound comprise a natural or synthetic aroma concentrate entrapped in a matrix of an aroma support.

7. Aromatizing agent according to claim 1, in which the droplets of an aroma compound comprise a natural or synthetic aroma concentrate dissolved in a liquid solvent.

8. Aromatizing agent according to claim 1, in which the agglomerating agent is fat, gum or sugar.

9. Aromatizing agent according to claim 1, in which the agglomerating agent is palm fat.

10. A process for manufacturing an aromatizing agent, which comprises agglomerating together particles of a foaming agent and particles and/or droplets of an aroma compound with an agglomerating agent.
